(19) Europäisches Patentamt
European Patent Office
Office européen des brevets

(11) **EP 3 178 593 B1**

(12) **EUROPÄISCHE PATENTSCHRIFT**

(45) Veröffentlichungstag und Bekanntmachung des Hinweises auf die Patenterteilung:
**25.03.2020   Patentblatt 2020/13**

(21) Anmeldenummer: **15198488.7**

(22) Anmeldetag: **08.12.2015**

(51) Int Cl.:
**B23F 21/16** (2006.01)     **B23C 5/28** (2006.01)
**B23F 17/00** (2006.01)

(54) **WÄLZFRÄSER UND VERFAHREN ZUM HERSTELLEN UND BETREIBEN EINES WÄLZFRÄSERS**

HOB AND METHOD FOR OPERATING AND MANUFACTURING A HOB

FRAISE MERE DEVELOPPANTE ET PROCEDE DE FABRICATION ET DE FONCTIONNEMENT D'UNE FRAISE MERE DEVELOPPANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.06.2017   Patentblatt 2017/24**

(73) Patentinhaber: **LMT Fette Werkzeugtechnik GmbH & Co. KG**
**21493 Schwarzenbek (DE)**

(72) Erfinder:
• **Immich, Philipp**
  **24576 Bad Bramstedt (DE)**
• **Kretzschmann, Uwe**
  **21493 Schwarzenbeck (DE)**
• **Weger, Stephan**
  **22089 Hamburg (DE)**

(74) Vertreter: **Hauck Patentanwaltspartnerschaft mbB**
**Postfach 11 31 53**
**20431 Hamburg (DE)**

(56) Entgegenhaltungen:
**CN-U- 202 239 838        CN-U- 204 108 438**
**DE-A1-102004 032 093     DE-U1-202013 101 070**
**US-A- 2 511 964          US-A1- 2013 302 098**

EP 3 178 593 B1

**Beschreibung**

Die Erfindung betrifft einen Wälzfräser mit einem zylindrischen Grundkörper, an dessen Umfang eine Mehrzahl von Schneidzähnen ausgebildet ist. Die Erfindung betrifft außerdem ein Verfahren zum Betreiben eines solchen Wälzfräsers.

Wälzfräser besitzen einen meist zylindrischen Grundkörper, an dessen Umfang eine Vielzahl von Schneidzähnen ausgebildet ist. Die Schneidzähne dienen zum zerspanenden Bearbeiten eines Werkstücks. Ein Wälzfräser ist beispielsweise bekannt aus DE 44 45 911 C1. Bei diesem Wälzfräser ist ein offenes Kühlkanalsystem vorgesehen, durch welches ein Kühlmittel durch den Wälzfräser geleitet wird und durch Öffnungen am Umfang des Grundkörpers zwischen in Umfangsrichtung beabstandeten Schneideinsätzen austritt. Das Kühlkanalsystem wird durch Bohren eingebracht.

Die Geometrie des Kühlkanalsystems ist nur in engen Grenzen variabel, da die Richtung der gebohrten Kühlkanäle nicht ohne weiteres geändert werden kann. Auch ist die durch ein offenes Kühlkanalsystem der beschriebenen Art erreichte Kühlwirkung nicht immer ausreichend.

Aus US 2013/0302098 A1 ist ein Wälzfräser bekannt, der aus mehreren scheibenförmigen Segmenten aufgebaut ist. Jedes Segment weist ein zentrales Durchgangsloch auf, welches auf der Drehachse des Wälzfräsers liegt, wobei die Durchgangslöcher gemeinsam eine Leitung für ein Kühlmittel bilden. Diese Kühlleitung kann geschlossen sein. US 2013/0302098 A1 zeigt den Oberbegriff des Anspruchs 1.

Aus US 2 511 964 A ist ein Wälzfräser bekannt mit einem axialen Einspannabschnitt zum Einspannen in eine Werkzeugmaschine.

Aus CN 204108438 U und CN 202239838 U sind Werkzeuge mit wendelförmigen Kühlkanälen bekannt.

Aus DE 10 2004 032 093 A1 ist ein Bauteil bekannt, das in einem selektiven Lasersintervorgang (SLS) hergestellt worden ist.

Aus DE 20 2013 101 070 U1 ist schließlich ein Werkzeug für eine Werkzeugmaschine bekannt, das einen vollständig in seinem Inneren verlaufenden Kühlmittelkanal aufweist, der sich zwischen einem Kühlmitteleinlass und einem Kühlmittelauslass erstreckt, wobei der Kühlmitteleinlass und der Kühlmittelauslass an ein Kühlmittelkreislauf der Werkzeugmaschiene anschließbar sind.

Ausgehend von dem erläuterten Stand der Technik liegt der Erfindung die Aufgabe zugrunde, einen Wälzfräser sowie Verfahren der eingangs genannten Art bereitzustellen, wobei ein Kühlkanalsystem mit optimierter und flexibel gestaltbarer Kühlwirkung vorgesehen ist.

Die Erfindung löst die Aufgabe durch die unabhängigen Ansprüche 1 und 12.

Vorteilhafte Ausgestaltungen finden sich in den abhängigen Ansprüchen, der Beschreibung und den Figuren.

Für einen Wälzfräser der eingangs genannten Art löst die Erfindung die Aufgabe dadurch, dass in dem Grundkörper ein geschlossenes Kühlkanalsystem für ein Kühlmittel ausgebildet ist, mit einer an einer Stirnseite des Grundkörpers angeordneten Kühlmittelzuführöffnung und einer ebenfalls an einer Stirnseite des Grundkörpers angeordneten Kühlmittelabführöffnung, wobei sich das Kühlkanalsystem über die axiale Ausdehnung des Grundkörpers erstreckt, wobei in dem Grundkörper zusätzlich ein von dem geschlossenen Kühlkanalsystem getrenntes offenes Kühlkanalsystem für ein Kühlmittel ausgebildet ist mit einer an einer Stirnseite des Grundkörpers angeordneten Kühlmittelzuführöffnung und einer Mehrzahl von Austrittsöffnungen im Bereich der Schneidzähne.

In an sich bekannter Weise besitzt der erfindungsgemäße Wälzfräser einen zylindrischen Grundkörper, an dessen Umfang eine Mehrzahl von insbesondere einstückig mit dem Grundkörper ausgebildeten Schneidzähnen ausgebildet ist. Die Schneidzähne können beispielsweise schneckenförmig über den Umfang des Grundkörpers verteilt angeordnet sein. An den Schneidzähnen können wechselbare Schneidplatten befestigt sein. Erfindungsgemäß ist in dem Wälzfräser ein geschlossenes Kühlkanalsystem vorgesehen. Dieses Kühlkanalsystem besitzt bis auf die Kühlmittelzuführöffnung und die Kühlmittelabführöffnung also keine weiteren Öffnungen, insbesondere keine Austrittsöffnungen am Umfang des Grundkörpers im Bereich der Schneidzähne. Die Kühlmittelzuführöffnung und die Kühlmittelabführöffnung können insbesondere an derselben Stirnseite des Grundkörpers angeordnet sein. Sofern in diesem Zusammenhang auf eine Richtung des Kühlkanalsystems Bezug genommen wird, bezieht sich dies auf die Fließrichtung des Kühlmittels in dem Kühlkanalsystem. Vorgegeben ist diese durch die Kühlmittelzuführöffnung, über die das Kühlmittel in das Kühlkanalsystem eingeleitet wird und die Kühlmittelabführöffnung, über die das Kühlmittel aus dem Kühlkanalsystem abgeführt wird.

Durch das erfindungsgemäße geschlossene Kühlkanalsystem wird eine optimale Kühlung gewährleistet. Durch eine individuell angepasste Geometrie der Kanäle des Kühlkanalsystems kann sichergestellt werden, dass alle zu kühlenden Bereiche des Wälzfräsers jederzeit ausreichend temperiert werden. Durch eine zuverlässige Temperierung des Wälzfräsers können hohe Bearbeitungsgeschwindigkeiten gewährleistet werden. Außerdem kann der Prozess an der Zerspanstelle trocken gehalten werden, was in manchen Anwendungen wünschenswert ist.

Die Kanäle des geschlossenen Kühlkanalsystems können beispielsweise einen kreisförmigen Querschnitt besitzen. Zwingend ist dies jedoch nicht. Bei dem durch das Kühlkanalsystem zu leitenden Kühlmittel kann es sich insbesondere um eine Kühlflüssigkeit handeln, beispielsweise Öl und/oder Wasser.

Der Grundkörper kann einen axialen Einspannabschnitt zum Einspannen des Wälzfräsers in einer Werkzeugmaschine umfassen, wobei das Kühlkanalsystem einen in dem Grundkörper wendelförmig um den axialen Einspannabschnitt verlaufenden Versorgungskanal umfasst, der mit der Kühlmittelzufuhröffnung und der Kühlmittelabführöffnung verbunden ist. Weiterhin können die Schneidzähne entlang einer Wendelform am Umfang des Grundkörpers angeordnet sein und die Wendelform des Versorgungskanals kann der Wendelform der Schneidzahnanordnung entsprechen. Der Einspannabschnitt kann zum Beispiel eine axiale Bohrung zur Aufnahme einer Antriebswelle der Werkzeugmaschine sein. Es kann sich aber auch um einen axialen Fortsatz handeln, der entsprechend in einer Aufnahme der Werkzeugmaschine aufgenommen wird. Oftmals sind die Schneidzähne bei Wälzfräsern schneckenförmig entlang einer Wendel verteilt am Umfang des Grundkörpers angeordnet. Sofern gemäß der o.g. Ausgestaltung die Wendelform des Versorgungskanals der Wendelform der Schneidzahnanordnung entspricht, erstreckt sich der Versorgungskanal unterhalb jedes Schneidzahns, wodurch die Kühlwirkung optimiert wird.

Von dem Versorgungskanal kann eine Mehrzahl von Kühlkanälen abzweigen, wobei die Kühlkanäle jeweils einen Schneidzahn durchlaufen und anschließend wieder in den Versorgungskanal münden. Es sind dabei insbesondere so viele Kühlkanäle wie Schneidzähne vorgesehen. Jeder Kühlkanal ist einem Schneidzahn zugeordnet, den er durchläuft. Die Abzweigung und Wiedereinmündung in den Versorgungskanal kann innerhalb des Grundkörpers insbesondere jeweils unter dem zugeordneten Schneidzahn vorgesehen sein. Zwischen ihrer Abzweigung aus dem Versorgungskanal und ihrer Wiedereinmündung in den Versorgungskanal sind die Kühlkanäle zumindest abschnittsweise innerhalb des jeweiligen Schneidzahns angeordnet und sorgen dort für eine gezielte Temperierung jedes Schneidzahns.

Die Kühlkanäle können jeweils einen innerhalb des jeweiligen Schneidzahns spiralförmig verlaufenden Kühlabschnitt aufweisen. Auf diese Weise wird eine gleichmäßige und großflächige Kühlung der Schneidzähne erreicht.

Nach einer weiteren Ausgestaltung kann vorgesehen sein, dass innerhalb der Schneidzähne ein mit dem jeweiligen Kühlkanal verbundenes und gegenüber dem jeweiligen Kühlkanal im Querschnitt vergrößertes Kühlreservoir ausgebildet ist. Durch diese Ausgestaltung kann die Kühlwirkung weiter verbessert werden. Die Kühlreservoirs werden durch taschenförmige Hohlräume innerhalb der Schneidzähne gebildet, in die jeweils ein erster von dem Versorgungskanal kommender Abschnitt der Kühlkanäle beispielsweise von einer Seite mündet und aus denen jeweils ein zweiter, wieder zurück zu dem Versorgungskanal führender Abschnitt der Kühlkanäle beispielsweise von einer gegenüberliegenden Seite abgeht. Die Kühlreservoirs sind im Querschnitt im Vergleich zu den Kühlkanälen erheblich vergrößert, insbesondere um ein Mehrfaches. Sie erstrecken sich insbesondere in zwei Richtungen, nämlich sowohl in Richtung der Schneidzahnbreite als auch der Schneidzahndicke. Dadurch wird gewährleistet, dass eine optimale Kühlung an den Außenflächen des Schneidzahns erfolgt. Vorteilhaft sind die Kühlreservoirs so gestaltet, dass sowohl die Stabilität des jeweiligen Schneidzahns als auch die optimale Kühlung der Außenflächen gewährleistet ist. Die Kühlreservoirs füllen sich im Betrieb mit Kühlmittel, welches aber gleichwohl über die Kühlkanäle ständig ausgetauscht wird, so dass die insoweit verstärkte Kühlwirkung im Wesentlichen konstant ist.

Eine weitere Verbesserung der Kühlwirkung lässt sich erreichen, wenn die Kühlreservoirs sich gemäß einer weiteren Ausgestaltung jeweils unterhalb des größten Teils der Zahnkopfoberfläche der Schneidzähne erstrecken.

Die Querschnittsform der Kühlreservoirs kann nach einer weiteren Ausgestaltung jeweils an die Querschnittsform der Schneidzähne im Bereich des Zahnkopfes angepasst sein. Durch diese individuelle Anpassung der Kühlreservoirs an die Schneidzahngeometrie wird eine weitere Verbesserung der Kühlwirkung erreicht.

Der Abstand S der Kühlreservoirs zur Spanfläche und der Abstand K der Kühlreservoirs zur Außenseite des Zahnkopfs können dabei jeweils so gewählt werden, dass ein Aufbereiten des Wälzfräsers bei Verschleiß durch Nachschleifen der Schneidzähne ermöglicht wird und gleichzeitig eine Kühlung auch bei neuen Werkzeugen, die noch keiner Aufbereitung unterzogen wurden, ausreichend wirksam ist.

Als besonders geeignet in dieser Hinsicht hat sich herausgestellt wenn für K gilt:

$$K > 1 + F1 \cdot H$$

, wobei H die Profilhöhe des jeweiligen Schneidzahns und F1 ein Faktor zwischen 0,05 mm und 0,2 mm ist. Bevorzugt beträgt F1 0,1 mm.

Für S hat sich in dieser Hinsicht als besonders geeignet herausgestellt, wenn gilt:

$$S > 1,5 + F2 \cdot D$$

, wobei D die Zahndicke des jeweiligen Schneidzahns und F2 ein Faktor zwischen 0,05 mm und 0,4 mm ist. Bevorzugt beträgt F2 0,2 mm.

Erfindungsgemäß ist vorgesehen, dass in dem Grundkörper zusätzlich ein von dem geschlossenen Kühlkanalsystem getrenntes offenes Kühlkanalsystem für ein Kühlmittel ausgebildet ist mit einer an einer Stirnseite des Grundkörpers angeordneten Kühlmittelzuführöffnung und einer Mehrzahl von Austrittsöffnungen im Bereich der Schneidzähne. Ein zusätzliches, offenes Kühlkanalsystem kann neben einer weiteren Kühlwirkung, insbesondere der direkten Kühlung der Außenflächen der Schneidzähne, zum schnellen Abtransport der im Betrieb erzeugten Späne genutzt werden. Bei Zerspanungswerkzeugen ist der Spanabtransport bedeutend, um die Standzeit der Werkzeuge wirtschaftlich zu halten. Es ist erforderlich, Späne so schnell wie möglich von der Wirkstelle zu entfernen, um ein Anhaften am Werkzeug zu vermeiden. Bei Wälzfräsern ist dies besonders bedeutend, da es sich um ein Verfahren mit einem besonders großen Zeitspanvolumen handelt. Das zusätzlich vorgesehene offene Kühlkanalsystem dient also insbesondere zum schnellen und gezielten Abführen von im Betrieb erzeugten Spänen. Dazu kann das offene Kühlkanalsystem zum Beispiel einen mit der Kühlmittelzuführöffnung verbundenen Kühlmittelversorgungskanal umfassen, von dem dann eine Mehrzahl von zu den Austrittsöffnungen führenden Kühlmittelverteilkanälen abgeht. Die Austrittsöffnungen können zum Beispiel so angeordnet sein, dass die unter hohem Druck austretende Kühlflüssigkeit auf die Spanflächen der Schneidzähne trifft. Auch die Kanäle des geschlossenen Kühlkanalsystems können einen kreisförmigen Querschnitt besitzen, zwingend ist dies wiederum nicht.

Nach einer weiteren Ausgestaltung kann der erfindungsgemäße Wälzfräser in einem additiven Verfahren bzw. einem 3D-Druckverfahren hergestellt worden sein. Durch additive Verfahren lassen sich die erfindungsgemäßen Kühlkanalsysteme besonders flexibel und einfach herstellen. Insbesondere lassen sich flexible Geometrien erzeugen, die durch das herkömmliche Erzeugen von Kühlkanälen durch Bohren nicht möglich sind. Dies betrifft insbesondere die oben erläuterten Geometrien mit wendelfömigem Versorgungskanal, von dem Versorgungskanal abzweigenden Kühlkanälen und innerhalb der Schneidzähne ausgebildeten Kühlmittelreservoirs. Nach dem additiven Verfahren kann noch eine Fertigbearbeitung des Wälzfräsers, insbesondere durch Schleifen, erfolgen. Auch kann insbesondere nach einem additiven Verfahren, und gegebenenfalls nach einer Fertigbearbeitung beispielsweise durch Schleifen, noch eine Beschichtung des Wälzfräsers mit einer Hartstoffschicht erfolgen, vorzugsweise in einem CVD-Verfahren oder einem PVD-Verfahren.

Der erfindungsgemäße Wälzfräser kann aus einem Schnellarbeitsstahlwerkstoff, insbesondere einer intermetallischen Legierung, oder aus einem Hartmetallwerkstoff oder aus einem Keramikwerkstoff bestehen. Es handelt sich hierbei um besonders verschleißfeste Materialien, die gut in additiven Verfahren verarbeitet werden können.

Die Erfindung betrifft auch ein Verfahren zum Herstellen eines erfindungsgemäßen Wälzfräsers, bei dem in einem additiven Verfahren in einer Form Material schichtweise aufgebracht und durch selektives Aufschmelzen und/oder Sintern des aufgebrachten Materials zumindest der Grundkörper mit den Schneidzähnen und dem geschlossenen Kühlkanalsystem und gegebenenfalls auch dem offenen Kühlkanalsystem, aufgebaut wird.

Das insbesondere pulverförmige Material wird für den 3D-Druck schichtweise in eine Form ausgebracht. Bei dem Material kann es sich beispielsweise um einen Metallwerkstoff oder einen Keramikwerkstoff handeln. Das selektive Aufschmelzen oder Sintern des Materials zum Bilden der gewünschten dreidimensionalen Form kann ein selektives Laserschmelzen oder selektives Lasersintern sein. Es erfolgt somit ein schichtweiser Aufbau des Wälzfräsers, insbesondere seines Grundkörpers und der Schneidzähne sowie der Kühlkanäle. Wie erläutert, kann nach dem additiven Verfahren kann noch eine Fertigbearbeitung des Wälzfräsers, insbesondere durch Schleifen, erfolgen. Wie ebenfalls erläutert, kann nach dem additiven Verfahren, und gegebenenfalls nach einer Fertigbearbeitung beispielsweise durch Schleifen, auch noch eine Beschichtung des Wälzfräsers mit einer Hartstoffschicht erfolgen, vorzugsweise in einem CVD-Verfahren oder einem PVD-Verfahren.

Die Erfindung betrifft außerdem ein Verfahren zum Betreiben eines erfindungsgemäßen Wälzfräsers, mit geschlossenem Kühlkanalsystem und offenem Kühlkanalsystem, wobei im Betrieb durch das geschlossene Kühlkanalsystem ein anderes Kühlmittel geleitet wird als durch das offene Kühlkanalsystem. Beispielsweise kann es sich bei dem durch das geschlossene Kühlkanalsystem geführten Kühlmittel um eine Kühlflüssigkeit mit hoher Kühlwirkung handeln, zum Beispiel ein Öl oder ein Wasser-Öl-Gemisch. Bei dem durch das offene Kühlkanalsystem geführten Kühlmittel kann es sich um eine Kühlflüssigkeit für einen maximalen Spanabtransport handeln, zum Beispiel Wasser. Auch kann das durch das offene Kühlkanalsystem geführte Kühlmittel unter höherem Druck durch das offene Kühlkanalsystem geführt werden als das durch das geschlossene Kühlkanalsystem geführte Kühlmittel. Auf diese Weise wird der Spanabtransport weiter befördert.

In Bezug auf den erfindungsgemäßen Wälzfräser kann die Kühlmittelzuführöffnung des geschlossenen Kühlkanalsystems mit einer anderen Kühlmittelversorgung, beispielsweise einer Versorgung für Kühlflüssigkeit mit hoher Kühlwirkung, zum Beispiel Öl oder ein Wasser-Öl-Gemisch, oder einem anderen Kühlfluid, wie gekühlte Luft, verbunden sein als die Kühlmittelzuführöffnung des offenen Kühlkanalsystems, welche beispielsweise mit einer Versorgung für Kühlflüssigkeit für maximalen Spanabtransport, zum Beispiel Wasser, verbunden sein kann.

Ausführungsbeispiele der Erfindung werden nachfolgend anhand von Figuren näher erläutert. Es zeigen schematisch:

Fig. 1      einen Wälzfräser in einer perspektivischen Ansicht,

Fig. 2      eine Visualisierung des bei dem Wälzfräser aus Fig. 1 vorgesehenen Kühlkanalsystems anhand eines Schneidzahns des in Fig. 1 gezeigten Wälzfräsers,

Fig. 3      eine Schnittansicht durch einen Schneidzahn des in Fig. 1 gezeigten Wälzfräsers,

Fig. 4 eine teiltransparente perspektivische Ansicht eines Schneidzahns des in Fig. 1 gezeigten Wälzfräsers nach einem weiteren Ausführungsbeispiel,

Fig. 5 eine Ansicht von vorn auf den in Fig. 4 gezeigten Schneidzahns,

Fig. 6 eine Schnittansicht entlang der Linie 6-6 in Fig. 5,

Fig. 7 eine Schnittansicht entlang der Linie 7-7 in Fig. 5,

Fig. 8 einen erfindungsgemäßen Wälzfräser in einer perspektivischen Ansicht, und

Fig. 9 eine teiltransparente Seitenansicht zweier Schneidzähne des in Fig. 8 gezeigten Wälzfräsers.

Soweit nichts anderes angegeben ist, bezeichnen in den Figuren gleiche Bezugzeichen gleiche Gegenstände.

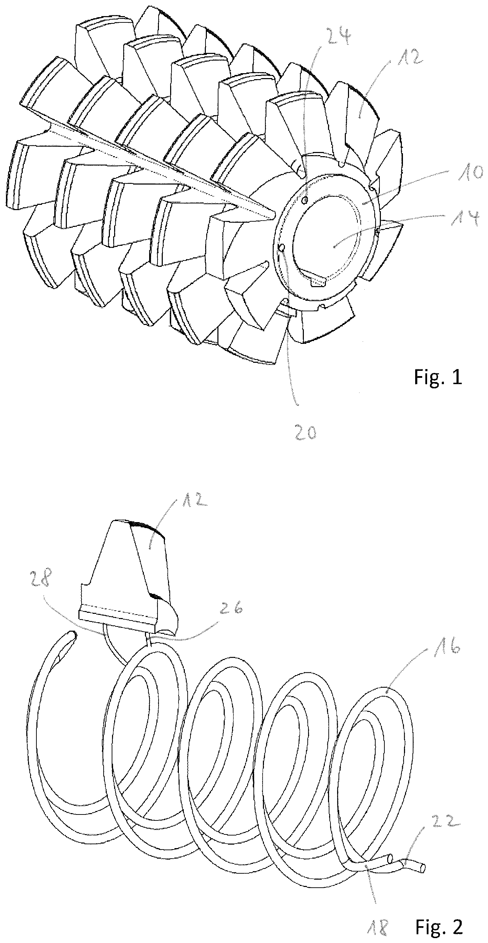

Der in Figur 1 gezeigte Wälzfräser besitzt einen zylindrischen Grundkörper 10, an dessen Umfang eine Mehrzahl von Schneidzähnen 12 entlang einer Wendelform angeordnet ist. Der zylindrische Grundkörper 10 besitzt eine axiale Bohrung 14 zum Einspannen in eine Werkzeugmaschine. In dem Wälzfräser ist ein geschlossenes Kühlkanalsystem ausgebildet, welches in Figur 2 zur Veranschaulichung ohne den Grundkörper und anhand eines Schneidzahns des in Figur 1 gezeigten Wälzfräsers dargestellt ist. Das geschlossene Kühlkanalsystem besitzt eine in dem Grundkörper 10 wendelförmig um die axiale Bohrung 14 verlaufenden Versorgungskanal 16, dessen eines Ende 18 mit einer Kühlmittelzuführöffnung 20 in dem Grundköroper 10 verbunden ist und dessen anderes Ende 22 mit einer Kühlmittelabführöffnung 24 in dem Grundkörper 10 verbunden ist. Über die Kühlmittelzuführöffnung 20 wird im Betrieb Kühlmittel, beispielsweise eine Kühlflüssigkeit, wie ein Wasser-Öl-Gemisch, in den Versorgungskanal 16 eingeleitet. Nach Durchlaufen des geschlossenen Kühlkanalsystems tritt das Kühlmittel wieder über die Kühlmittelabführöffnung 24 aus. Die Wendelform des Versorgungskanals 16 ist an die Wendelform der Schneidzahnanordnung angepasst.

Von dem Versorgungskanal 16 zweigt eine Mehrzahl von Kühlkanälen ab, die jeweils einen der Schneidzähne 12 durchlaufen und anschließend wieder in den Versorgungskanal 16 münden. In Figur 2 ist dies zur Veranschaulichung für einen Schneidzahn 12 dargestellt. Bei dem Bezugzeichen 26 ist in Figur 2 der von dem Versorgungskanal 16 abzweigende Abschnitt des Kühlkanals zu erkennen, der in den Schneidzahn 12 eintritt. Bei dem Bezugzeichen 28 ist der Abschnitt des Kühlkanals zu erkennen, der von dem Schneidzahn 12 kommend wieder in den Versorgungskanal 16 mündet. Wie erwähnt, sind solche Kühlkanäle 26, 28 für jeden der Schneidzähne 12 des in Figur 1 gezeigten Wälzfräsers vorgesehen.

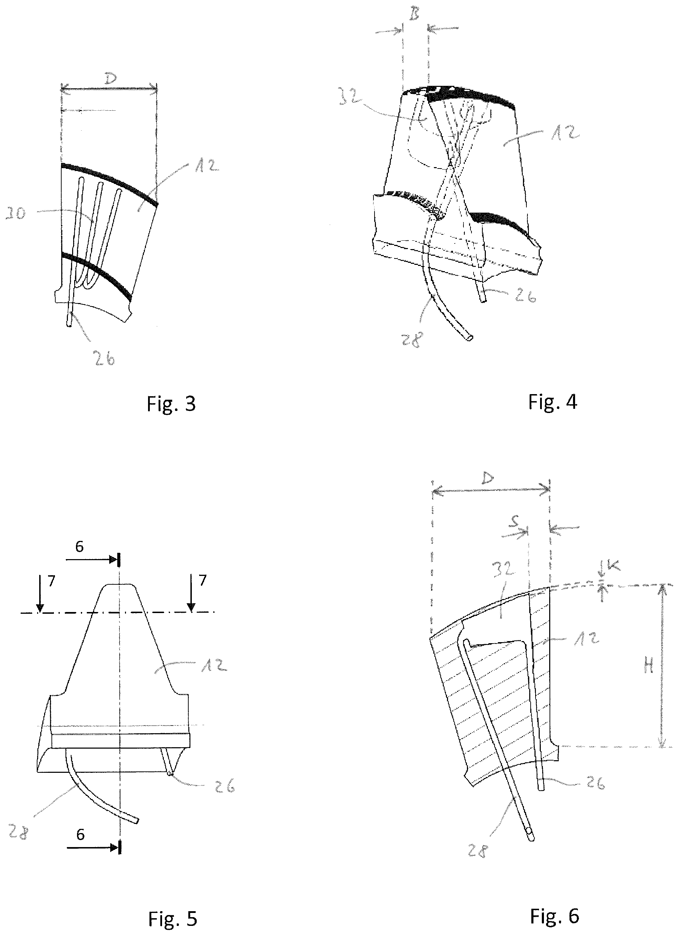

In Figur 3 ist ein Ausführungsbeispiel eines Verlaufs der von dem Versorgungskanal 16 abzweigenden Kühlkanäle innerhalb des Schneidzahns 12 gezeigt. In diesem Beispiel weisen die Kühlkanäle jeweils einen innerhalb des Schneidzahns 12 spiralförmig verlaufenden Kühlabschnitt 30 auf.

Ein weiteres Ausführungsbeispiel für eine Ausbildung der Kühlkanäle innerhalb der Schneidzähne 12 ist in den Figuren 4 bis 7 gezeigt. Bei diesem Ausführungsbeispiel ist innerhalb der Schneidzähne 12 jeweils ein mit dem jeweiligen Kühlkanal verbundenes und gegenüber dem jeweiligen Kühlkanal im Querschnitt vergrößertes Kühlreservoir 32 ausgebildet. Wie insbesondere in Figur 6 zu erkennen, tritt der von dem Versorgungskanal 16 kommende Abschnitt 26 des jeweiligen Kühlkanals von einer Seite in das Kühlreservoir 32 ein. Der zweite Abschnitt 28 des jeweiligen Kühlkanals führt von einer gegenüberliegenden Seite des Kühlreservoirs 32 weg.

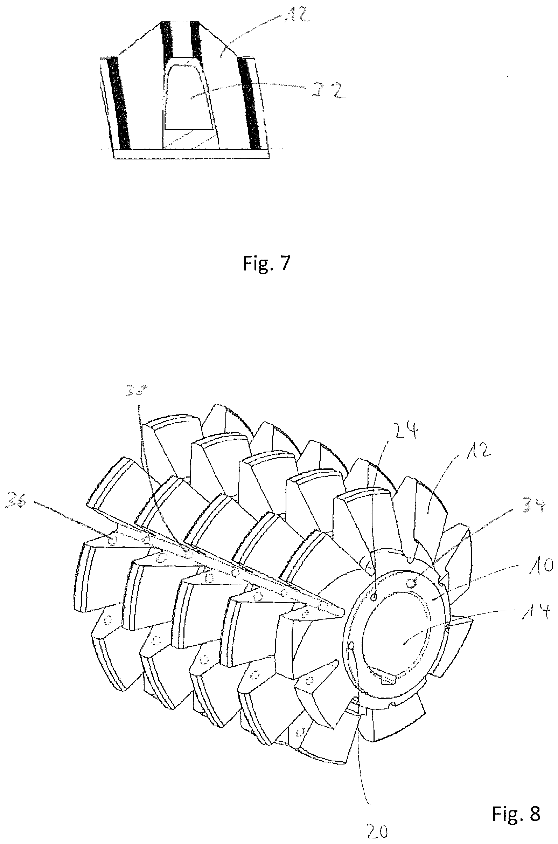

Wie sich insbesondere aus einem Vergleich der Figuren 6 und 7 ergibt, erstrecken sich die Kühlreservoirs 32 in zwei Freiheitsgrade, nämlich in Richtung der in Figur 4 dargestellten Zahnbreite B und in Richtung der in Figur 3 gezeigten Zahndicke D der Schneidzähne 12. Auf diese Weise wird gewährleistet, dass eine optimale Kühlung an den Außenflächen der Schneidzähne 12 erfolgt. Außerdem ist insbesondere in den Schnittdarstellungen der Figuren 6 und 7 zu erkennen, dass die Kühlreservoirs 32 eine die Kühlwirkung begünstigende dreidimensionale Form aufweist. So bildet das Kühlreservoir 32 eine Trichterform aus, die sicherstellt, dass die erforderliche Kühlung in der Nähe der Außenflächen des jeweiligen Schneidzahns 12 zuverlässig erfolgt.

Der Abstand S der Kühlreservoirs 32 zur Spanfläche und der Abstand K der Kühlreservoirs 32 zur Außenseite des Zahnkopfs (s. Fig. 6) sind dabei jeweils so gewählt, dass ein Aufbereiten des Wälzfräsers bei Verschleiß durch Nachschleifen der Schneidzähne ermöglicht wird und gleichzeitig eine Kühlung auch bei neuen Werkzeugen, die noch keiner Aufbereitung unterzogen wurden, ausreichend wirksam ist. Bei H ist in Fig. 6 die Profilhöhe des jeweiligen Schneidzahns eingezeichnet. Bei D ist in Fig. 6 die Zahndicke gezeigt.

Als besonders geeignet hat es sich herausgestellt wenn für K gilt:

$$K > 1 + F1 \cdot H$$

, wobei F1 ein Faktor zwischen 0,05 mm und 0,2 mm ist. Bevorzugt beträgt F1 0,1 mm.

Für S hat sich als besonders geeignet herausgestellt, wenn gilt:

$$S > 1,5 + F2 \cdot D$$

, wobei F2 ein Faktor zwischen 0,05 mm und 0,4 mm ist. Bevorzugt beträgt F2 0,2 mm.

In Fig. 8 ist ein Wälzfräser nach der Erfindung gezeigt.

Dieses Ausführungsbeispiel unterscheidet sich von den in den Figuren 1 bis 7 gezeigten Ausführungsbeispielen lediglich dadurch, dass zusätzlich zu dem geschlossenen Kühlkanalsystem ein offenes Kühlkanalsystem vorgesehen ist. Abgesehen von diesem Unterschied kann der in Fig. 8 gezeigte Wälzfräser ausgebildet sein, wie in den Figuren 1 bis 7 gezeigt.

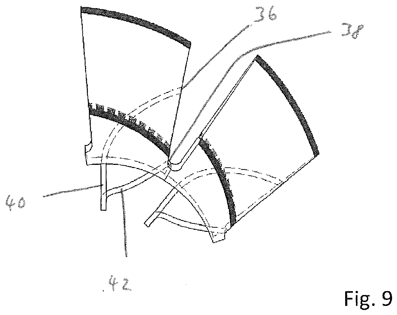

Das offene Kühlkanalsystem besitzt eine an der Stirnseite des Grundkörpers 10 angeordnete Kühlmittelzuführöffnung 34 und eine Mehrzahl von Austrittsöffnungen 36, 38 im Bereich der Schneidzähne 12. Der Verlauf der Kühlkanäle in den Schneidzähnen 12 ist in Fig. 9 genauer zu erkennen. Zu erkennen sind von einem nicht näher dargestellten, innerhalb des Grundkörpers 10 verlaufenden Versorgungskanal abgehende, zu den Austrittsöffnungen 36, 38 führende Kühlkanäle 40, 42. Der mit der Kühlmittelzuführöffnung 34 verbundene Versorgungskanal kann ähnlich wie der Versorgungskanal 16 des oben erläuterten geschlossenen Kühlkanalsystems wendelförmig um die axiale Bohrung 14 verlaufen.

**Patentansprüche**

1. Wälzfräser mit einem zylindrischen Grundkörper (10), an dessen Umfang eine Mehrzahl von Schneidzähnen (12) ausgebildet ist, wobei in dem Grundkörper (10) ein geschlossenes Kühlkanalsystem für ein Kühlmittel ausgebildet ist, mit einer an einer Stirnseite des Grundkörpers (10) angeordneten Kühlmittelzuführöffnung (20) und einer ebenfalls an einer Stirnseite des Grundkörpers (10) angeordneten Kühlmittelabführöffnung (24), wobei sich das Kühlkanalsystem über die axiale Ausdehnung des Grundkörpers (10) erstreckt, **dadurch gekennzeichnet, dass** in dem Grundkörper (10) zusätzlich ein von dem geschlossenen Kühlkanalsystem getrenntes offenes Kühlkanalsystem für ein Kühlmittel ausgebildet ist mit einer an einer Stirnseite des Grundkörpers (10) angeordneten Kühlmittelzuführöffnung (34) und einer Mehrzahl von Austrittsöffnungen (36, 38) im Bereich der Schneidzähne (12).

2. Wälzfräser nach Anspruch 1, **dadurch gekennzeichnet, dass** der Grundkörper (10) einen axialen Einspannabschnitt zum Einspannen des Wälzfräsers in einer Werkzeugmaschine umfasst, wobei das Kühlkanalsystem einen in dem Grundkörper (10) wendelförmig um den axialen Einspannabschnitt verlaufenden Versorgungskanal (16) umfasst, der mit der Kühlmittelzuführöffnung (20) und der Kühlmittelabführöffnung (24) verbunden ist.

3. Wälzfräser nach Anspruch 2, **dadurch gekenn-**

**zeichnet, dass** die Schneidzähne (12) entlang einer Wendelform am Umfang des Grundkörpers (10) angeordnet sind, und dass die Wendelform des Versorgungskanals (16) der Wendelform der Schneidzahnanordnung entspricht.

4. Wälzfräser nach einem der Ansprüche 2 oder 3, **dadurch gekennzeichnet, dass** von dem Versorgungskanal (16) eine Mehrzahl von Kühlkanälen (26, 28) abzweigt, wobei die Kühlkanäle (26, 28) jeweils einen Schneidzahn durchlaufen und anschließend wieder in den Versorgungskanal (16) münden.

5. Wälzfräser nach Anspruch 4, **dadurch gekennzeichnet, dass** die Kühlkanäle (26, 28) jeweils einen innerhalb des jeweiligen Schneidzahns spiralförmig verlaufenden Kühlabschnitt (30) aufweisen.

6. Wälzfräser nach einem der Ansprüche 4 oder 5, **dadurch gekennzeichnet, dass** innerhalb der Schneidzähne (12) ein mit dem jeweiligen Kühlkanal (26, 28) verbundenes und gegenüber dem jeweiligen Kühlkanal (26, 28) im Querschnitt vergrößertes Kühlreservoir (32) ausgebildet ist.

7. Wälzfräser nach Anspruch 6, **dadurch gekennzeichnet, dass** die Kühlreservoirs (32) sich jeweils unterhalb des größten Teils der Zahnkopfoberfläche der Schneidzähne (12) erstrecken.

8. Wälzfräser nach einem der Ansprüche 6 oder 7, **dadurch gekennzeichnet, dass** die Querschnittsform der Kühlreservoirs (32) jeweils an die Querschnittsform der Schneidzähne (12) im Bereich des Zahnkopfes angepasst ist.

9. Wälzfräser nach einem der vorhergehenden Ansprüche, **dadurch gekennzeichnet, dass** er in einem additiven Verfahren hergestellt worden ist.

10. Wälzfräser nach einem der vorhergehenden Ansprüche, **dadurch gekennzeichnet, dass** er aus einem Schnellarbeitsstahlwerkstoff, insbesondere einer intermetallischen Legierung, oder aus einem Hartmetallwerkstoff oder aus einem Keramikwerkstoff besteht.

11. Wälzfräser nach einem der vorhergehenden Ansprüche, **dadurch gekennzeichnet, dass** er mit einer Hartstoffschicht beschichtet ist, vorzugsweise hergestellt in einem CVD-Verfahren oder einem PVD-Verfahren.

12. Verfahren zum Betreiben eines Wälzfräsers nach einem der vorhergehenden Ansprüche, **dadurch gekennzeichnet, dass** im Betrieb durch das geschlossene Kühlkanalsystem ein anderes Kühlmittel geleitet wird als durch das offene Kühlkanalsystem.

## Claims

1. A hob having a cylindrical base body (10), on the circumference of which a plurality of cutting teeth (12) is configured, wherein a closed cooling channel system for a coolant is configured in the base body (10), having a coolant feed opening (20) arranged on a face of the base body (10) and a coolant discharge opening (24) likewise arranged on a face of the base body (10), wherein the cooling channel system extends over the axial extent of the base body (10), **characterized in that** an open cooling channel system for a coolant, which is separate from the closed cooling channel system, is additionally configured in the base body (10), having a coolant feed opening (34) arranged on a face of the base body (10) and a plurality of outlet openings (36, 38) in the region of the cutting teeth (12).

2. The hob according to Claim 1, **characterized in that** the base body (10) comprises an axial chucking section for chucking the hob in a machine tool, wherein the cooling channel system comprises a supply channel (16) running helically around the axial chucking section in the base body (10), said supply channel being connected to the coolant feed opening (20) and the coolant discharge opening (24).

3. The hob according to Claim 2, **characterized in that** the cutting teeth (12) are arranged along a helical shape on the circumference of the base body (10), and the helical shape of the supply channel (16) corresponds to the helical shape of the cutting tooth arrangement.

4. The hob according to any one of Claims 2 or 3, **characterized in that** a plurality of cooling channels (26, 28) branches off from the supply channel (16), wherein the cooling channels (26, 28) each run through a cutting tooth and then open out again into the supply channel (16).

5. The hob according to Claim 4, **characterized in that** the cooling channels (26, 28) each have a cooling section (30) running in the form of a spiral within the respective cutting tooth.

6. The hob according to any one of Claims 4 or 5, **characterized in that** a cooling reservoir (32) which is connected to the respective cooling channel (26, 28) and has an enlarged cross-section with respect to the respective cooling channel (26, 28) is configured within the cutting teeth (12).

7. The hob according to Claim 6, **characterized in that** the cooling reservoirs (32) each extend below the largest part of the surface of the tooth tip of the cutting teeth (12).

8. The hob according to any one of Claims 6 or 7, **characterized in that** the cross-sectional form of the cooling reservoirs (32) is in each case adapted to the cross-sectional form of the cutting teeth (12) in the region of the tooth tip.

9. The hob according to any one of the preceding claims, **characterized in that** it has been manufactured using an additive method.

10. The hob according to any one of the preceding claims, **characterized in that** it consists of a high-speed steel material, in particular an intermetallic alloy, or of a carbide material or of a ceramic material.

11. The hob according to any one of the preceding claims, **characterized in that** it is coated with a hard material layer, preferably manufactured using a CVD method or a PVD method.

12. A method for operating a hob according to any one of the preceding claims, **characterized in that** a different coolant is conducted through the closed cooling channel system during operation than through the open cooling channel system.

## Revendications

1. Fraise mère développante avec un corps de base cylindrique (10), sur le pourtour duquel sont formées une pluralité de dents de coupe (12), dans laquelle un système de canal de refroidissement fermé pour un liquide de refroidissement est formé dans le corps de base (10), avec une ouverture d'alimentation en liquide de refroidissement (20) disposée sur un côté frontal du corps de base (10) et une ouverture d'évacuation de liquide de refroidissement (24) également disposée sur un côté frontal du corps de base (10), dans laquelle le système de canal de refroidissement s'étend sur l'extension axiale du corps de base (10), **caractérisée en ce qu'**un système de canal de refroidissement ouvert pour un liquide de refroidissement, séparé du système de canal de refroidissement fermé, est en outre formé dans le corps de base (10), avec une ouverture d'alimentation en liquide de refroidissement (34) disposée sur un côté frontal du corps de base (10) et une pluralité d'ouvertures de sortie (36, 38) dans la région des dents de coupe (12).

2. Fraise mère développante selon la revendication 1, **caractérisée en ce que** le corps de base (10) comporte une section de serrage axiale pour le serrage de la fraise mère développante dans une machine-outil, dans laquelle le système de canal de refroidissement comporte un canal de distribution (16) s'étendant de façon hélicoïdale autour de la section de serrage axiale dans le corps de base (10), lequel est relié à l'ouverture d'alimentation en liquide de refroidissement (20) et à l'ouverture d'évacuation de liquide de refroidissement (24).

3. Fraise mère développante selon la revendication 2, **caractérisée en ce que** les dents de coupe (12) sont disposées le long d'une forme hélicoïdale sur le pourtour du corps de base (10), et **en ce que** la forme hélicoïdale du canal de distribution (16) correspond à la forme hélicoïdale de l'ensemble de dents de coupe.

4. Fraise mère développante selon l'une des revendications 2 et 3, **caractérisée en ce qu'**une pluralité de canaux de refroidissement (26, 28) bifurquent à partir du canal de distribution (16), dans laquelle les canaux de refroidissement (26, 28) traversent respectivement une dent de coupe et débouchent ensuite de nouveau dans le canal de distribution (16).

5. Fraise mère développante selon la revendication 4, **caractérisée en ce que** les canaux de refroidissement (26, 28) présentent respectivement une section de refroidissement (30) s'étendant en forme de spirale à l'intérieur de la dent de coupe respective.

6. Fraise mère développante selon l'une des revendications 4 ou 5, **caractérisée en ce qu'**un réservoir de refroidissement (32) relié au canal de refroidissement (26, 28) respectif et agrandi dans sa section transversale par rapport au canal de refroidissement (26, 28) respectif est formé à l'intérieur des dents de coupe (12).

7. Fraise mère développante selon la revendication 6, **caractérisée en ce que** les réservoirs de refroidissement (32) s'étendent respectivement sous une majeure partie de la surface supérieure de la tête de dent des dents de coupe (12).

8. Fraise mère développante selon l'une des revendications 6 et 7, **caractérisée en ce que** la forme de section transversale du réservoir de refroidissement (32) est respectivement adaptée à la forme de section transversale des dents de coupe (12) dans la région de la tête de dent.

9. Fraise mère développante selon l'une des revendications précédentes, **caractérisée en ce que** celle-ci a été fabriquée à l'aide d'un procédé additif.

10. Fraise mère développante selon l'une des revendications précédentes, **caractérisée en ce que** celle-ci est constituée d'un matériau à base d'acier à coupe rapide, en particulier d'un alliage intermétallique, ou d'un matériau métallique dur ou d'un matériau céramique.

11. Fraise mère développante selon l'une des revendications précédentes, **caractérisée en ce que** celle-ci est revêtue d'une couche de matériau dur, avantageusement fabriquée à l'aide d'un procédé CVD ou d'un procédé PVD.

12. Procédé pour le fonctionnement d'une fraise mère développante selon l'une des revendications précédentes, **caractérisé en ce que** pendant le fonctionnement, un autre liquide de refroidissement est guidé à travers le système de canal de refroidissement fermé qu'à travers le système de canal de refroidissement ouvert.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4445911 C1
- US 20130302098 A1
- US 2511964 A
- CN 204108438 U
- CN 202239838 U
- DE 102004032093 A1
- DE 202013101070 U1